Europäisches Patentamt

European Patent Office

Office européen des brevets

(11) Veröffentlichungsnummer: **0 065 713**

**A1**

(12) # EUROPÄISCHE PATENTANMELDUNG

(21) Anmeldenummer: 82104178.7

(22) Anmeldetag: 13.05.82

(51) Int. Cl.³: **B 41 F 27/12**
**G 03 B 27/64**

(30) Priorität: 21.05.81 DE 3120172

(43) Veröffentlichungstag der Anmeldung:
01.12.82 Patentblatt 82/48

(84) Benannte Vertragsstaaten:
AT BE CH DE FR GB IT LI NL SE

(71) Anmelder: DR.-ING. RUDOLF HELL GmbH
Grenzstrasse 1-5
D-2300 Kiel 14(DE)

(72) Erfinder: Block, Dieter
Poppenrade 37
D-2300 Kiel 14(DE)

(72) Erfinder: Homfeldt, Volker
Voorder Winkel 8
D-2302 Flintbek(DE)

(72) Erfinder: Parl, Ulrich
Preetzer Strasse 51
D-2301 Raisdorf(DE)

(54) **Vakuumspanneinrichtung für Filme oder filmähnliche Materialien.**

(57) Die Erfindung betrifft eine Einrichtung zum Aufspannen von Filmen auf die Trommeln von Scannern mittels Vakuum. Moderne Scanner drehen sehr schnell, der Film unterliegt großen Fliehkräften und muß auf seiner gesamten Fläche ohne Verformung angesaugt werden. Dies wird durch eine ledernarbenartige Struktur erreicht, die aus irregulär geformten kleinen Einzelflächen der ursprünglichen Zylinderfläche besteht. Die Flächen sind umgeben von einem Netz schmaler und flacher Kanäle, die ein in sich geschlossenes System bilden.

Croydon Printing Company Ltd.

Beschreibung

Vakuumspanneinrichtung für Filme oder filmähnliche
Materialien.

Technisches Gebiet

Die Erfindung bezieht sich auf die Reproduktionstechnik und betrifft eine Einrichtung zum Aufspannen von Filmen mittels Vakuum, insbesondere auf
Abtast- und Schreibzylinder von schnellaufenden
Trommelscannern.

Zugrundeliegender Stand der Technik

Es sind Einrichtungen der genannten Art bekannt,
bei denen in die Oberfläche der Zylinder in einigem Abstand von den Formatkanten des Films Kanäle
eingearbeitet sind, die durch Bohrungen aus dem
Inneren des Zylinders evakuiert werden und den Film
an den Kanten ansaugen. Die Mitte des Filmformates
aber, gerade jene Partien also, an denen die Fliehkräfte bei Rotation des Zylinders angreifen, wird
nicht niedergehalten, weil durch die dichtende Wirkung der Kanalkanten die Vakuumkräfte nicht bis
unter die große Filmfläche durchgreifen. Die Folge
ist, daß sich bei höheren Laufgeschwindigkeiten die
Formatmitte abhebt, wobei die Formatkanten über die
Zylinderoberfläche zu gleiten beginnen, bis schließ-

- 2 -

lich das Vakuum in den Kanälen zusammenbricht und der Film vom Zylinder abfliegt.

Die Trommeldrehzahlen wie auch die Durchmesser moderner Scanner werden immer größer. Die Fliehkräfte wachsen linear mit der Masse des Films und quadratisch mit der Drehzahl an. Die beschriebene Anordnung kann modernen Scannern deshalb nicht mehr gerecht werden.

Man hat deshalb versucht, durch viele regulär angeordnete Bohrungen und/oder Kanäle, die über das gesamte Filmformat verteilt sind, diese Schwierigkeiten zu umgehen, jedoch zeigt sich dabei, daß sich der Film am Ort der Löcher oder Kanäle durch die Vakuumkräfte leicht einzieht. Bedenkt man weiterhin, daß moderne Scanner gerastete Aufzeichnungen machen und daß die Apertur der Abtast- bzw. Schreiborgane eventuell recht groß ist, dann erkennt man leicht, daß sich durch "Einziehungen" des Films an den Vakuumsaugstellen sehr leicht Fehler in der Rasterpunktform, -größe und -schärfe ergeben. Diese treten im aufgezeichneten Bild periodisch in Erscheinung und werden gerade dadurch vom Auge als außerordentlich störend empfunden, zumal sie mit aufgezeichneten Rastern moiréähnliche Erscheinungen bilden können.

Offenbarung der Erfindung

Der vorliegenden Erfindung liegt die Aufgabe zugrunde, eine Vakuumspanneinrichtung für Filme auf schnellaufenden Trommelscannern anzugeben, die die genannten Nachteile vermeidet. Die Erfindung erreicht dies dadurch, daß die Aufspannfläche eine ledernarbenartige Struktur aufweist, die aus einer Vielzahl irregulär geformter und zueinander irregulär angeordneter Teilflächen besteht, wobei die Teilflächen Teile der ursprünglichen Zylinderoberfläche sind, daß die einzelnen Teilflächen durch flache, schmale in sich geschlossene Kanäle voneinander getrennt sind, daß diese Kanäle so angeordnet sind, daß sie miteinander in Verbindung stehen und daß die Kanäle durch mindestens eine Bohrung mit dem evakuierten Zylinderinneren in Verbindung stehen.

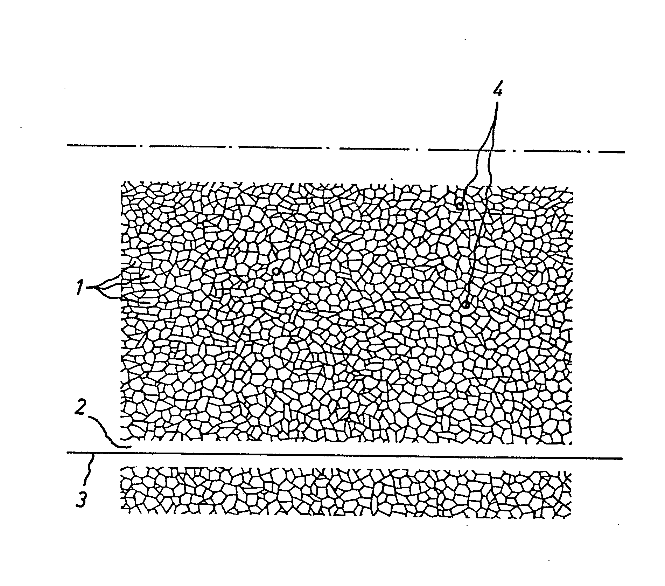

Kurze Beschreibung der Zeichnung

Die Erfindung wird im folgenden an Hand der Figur näher erläutert. Die Figur zeigt einen Teilausschnitt aus der Zylinderoberfläche.

Bester Weg zur Ausführung der Erfindung

Anordnung der Teilflächen und Kanäle sind aus der Figur ersichtlich. Man erkennt, daß die Kanalbreite - hier nur als die Strichstärke zwischen den Teilflächen wiedergegeben - klein ist gegen die irregulär geformten Teilflächen 1 und daß das Netz der Kanäle in sich geschlossen ist. Die Tiefe der Kanäle braucht erfahrungsgemäß nur einige 10tel Millimeter zu betragen. Sie können z. B. durch Ätzen, Gravieren, Erodieren oder mittels Hochenergiestrahlen hergestellt werden. Ebenfalls ist aus der Zeichnung die Anordnung der über die Zylinderoberfläche verteilten Bohrungen 4 zu ersehen, über die die Kanäle mit dem im Innern des Zylinders erzeugten Vakuum in Verbindung stehen. Am unteren Rande zeigt die Figur einen Streifen 2, der zur Achsrich-

- 4 -

tung des Zylinders parallel liegt und das beschriebene Muster nicht aufweist. Das heißt, er besteht aus der ursprünglichen Zylinderoberfläche. Davon sind mehrere so am Zylinderumfang angeordnet, daß die achsparallelen Kanten 3 gängiger Filmformate auf diese Streifen zu liegen kommen. Die Formatkante des Films wird dadurch besonders fest niedergehalten, weil das Netz der Kanäle in der Nähe der Filmkante 3 verschlossen ist und von dorther keine Luft nachströmen kann.

- 5 -

## Gewerbliche Verwertbarkeit

Die Erfindung wird mit Vorteil an schnellaufenden Trommelscannern in der Reproduktionstechnik angewendet. Die Anwendung ist allerdings nicht darauf beschränkt. Auf die gleiche Weise können z. B. mittels Vakuum Filme oder filmähnliche Materialien auf Plankassetten, Filmbühnen von Kameras, Kopiergeräten, Vergrößerungsgeräten oder dergleichen aufgespannt werden.

- 6 -

Gegenstand der Erfindung

Patentansprüche

1. Aufspanneinrichtung für filmähnliche Materialien auf plane oder zylindrische Flächen insbesondere auf Abtast- und/oder Schreibzylinder von Scannern, die zum Zwecke des Filmansaugens unter Vakuum stehen, dadurch gekennzeichnet, daß die Aufspannfläche eine ledernarbenartige Struktur aufweist, die aus einer Vielzahl irregulär geformter und zueinander irregulär angeordneter Teilflächen besteht, wobei die Teilflächen Teile der ursprünglichen Zylinderoberfläche sind, daß die einzelnen Teilflächen durch flache, schmale in sich geschlossene Kanäle voneinander getrennt sind, daß diese Kanäle so angeordnet sind, daß sie miteinander in Verbindung stehen und daß die Kanäle durch mindestens eine Bohrung mit dem evakuierten Zylinderinneren in Verbindung stehen.

2. Aufspanneinrichtung nach Anspruch 1, dadurch gekennzeichnet, daß die Aufspannfläche eines Zylinders an den beiden achsparallelen Kanten des Filmformates auf einigen Millimetern breite, die beschriebene Struktur nicht aufweist, sondern die ursprüngliche Oberfläche durchgehend als achsparalleler Streifen erhalten ist.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 005 653  (W.C.ARKELL) *Spalte  8,  Zeilen  23-47; Abbildung 11* | 1 | B 41 F  27/12 G 03 B  27/64 |
| | --- | | |
| A | FR-A-2 196 910  (J.SCHULZ) *Seite 5, Zeilen 23-38; Abbildung 2* | 1 | |
| | --- | | |
| A | US-A-3 380 381  (R.D.MUSGRAVE) *Patentansprüche  1,2;  Abbildung 10* | 1 | |
| | ----- | | |

RECHERCHIERTE
SACHGEBIETE (Int. Cl. ³)

B 65 H  27/00
B 41 F  27/12
G 03 G  15/00
G 03 B  27/62
G 03 B  27/64

Der vorliegende Recherchenbericht wurde für alle Patentansprüche erstellt.

| Recherchenort DEN HAAG | Abschlußdatum der Recherche 07-09-1982 | Prüfer GRASSELLI P. |
|---|---|---|